(19) Europäisches Patentamt
European Patent Office
Office européen des brevets

(11) **EP 4 066 375 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **20793697.2**

(22) Anmeldetag: **21.10.2020**

(51) Internationale Patentklassifikation (IPC):
***H02P 29/50*** *(2016.01)*

(52) Gemeinsame Patentklassifikation (CPC):
**H02P 29/50;** Y02T 10/64

(86) Internationale Anmeldenummer:
**PCT/EP2020/079600**

(87) Internationale Veröffentlichungsnummer:
**WO 2021/104763 (03.06.2021 Gazette 2021/22)**

(54) **VERFAHREN UND VORRICHTUNG ZUR REGELUNG EINER ELEKTRISCHEN MASCHINE**

METHOD AND DEVICE FOR REGULATING AN ELECTRIC MACHINE

PROCÉDÉ ET DISPOSITIF DE RÉGULATION D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2019 DE 102019218553**

(43) Veröffentlichungstag der Anmeldung:
**05.10.2022 Patentblatt 2022/40**

(73) Patentinhaber: **Robert Bosch GmbH 70442 Stuttgart (DE)**

(72) Erfinder:
- **HIRSCH, Michele**
  **73730 Esslingen (DE)**
- **LEE, Wei-Lung**
  **74321 Bietigheim-Bissingen (DE)**
- **PAULUS, Sebastian**
  **73728 Esslingen Am Neckar (DE)**

(56) Entgegenhaltungen:
DE-A1- 102018 202 967    DE-A1- 19 617 866
US-A1- 2002 097 015      US-A1- 2006 038 531
US-A1- 2013 193 898

## Beschreibung

Die Erfindung betrifft ein Verfahren und eine Vorrichtung zur Regelung einer elektrischen Maschine. Ferner betrifft die Erfindung ein elektrisches Antriebssystem mit einer entsprechenden Vorrichtung und ein Fahrzeug mit einem elektrischen Antriebssystem sowie ein Computerprogramm und ein computerlesbares Speichermedium.

## Stand der Technik

Die Druckschriften US 2002/097015 A1, US 2006/038531 A1, US 2013/193898 A1 und DE 10 2018 202967 A1 offenbaren Verfahren und Vorrichtungen zur Regelung einer elektrischen Maschine.

Die Druckschrift DE 2017 102 036 91 A1 offenbart eine Regelung für eine elektrische Maschine, bei der gleichzeitig eine Störgröße kompensiert und ein Sollwert eingestellt wird. Für den Betrieb einer elektrischen Maschine wird als Sollwert ein Phasenstrom eingeregelt. Der Phasenstrom wird bevorzugt als sinusförmige Grundwelle eingeregelt. Der Phasenstrom bewirkt beim Betrieb der elektrischen Maschine die Abgabe eines gleichmäßigen mittleren Drehmomentes. Aufgrund von nicht ideal sinusförmigen Magnetfeldern, Windungsanordnungen, Nutung, Zahnform, Sättigungseffekten und/oder anderen Effekten bilden sich neben dem gleichmäßigen mittleren Drehmoment auch harmonische Oberschwingungen des Drehmomentes aus. Solche Effekte führen zu Kraftwellen zwischen Rotor und Stator, die bei charakteristischen Ordnungen als tangentiale und radiale Zahnkräfte auf die Statorzähne wirken. Durch das mechanische Übertragungsverhalten der elektrischen Maschine werden diese Kräfte als Schwingungen in der Maschine, des Maschinengehäuses und angekoppelten Elementen und damit als Körper- und Luftschall oder Oberflächenschwingungen wahrnehmbar. Die harmonischen Oberschwingungen des Drehmomentes bewirken dabei auch Oberwellen der elektrischen Frequenz der elektrischen Maschine auf dem Phasenstrom als Störgrößen. Zur Minimierung dieser Störgrößen werden gezielt Oberwellen eingeregelt und vorgegeben, welche dem eingeregelten und vorgegebenen Phasenstrom überlagert werden.

Es besteht ein Bedürfnis für alternative Verfahren und Vorrichtungen zur Regelung einer elektrischen Maschine, mit dem die Oberwellen möglichst robust, stabil, mit hoher Dynamik und Flexibilität zur Berücksichtigung relevanter Frequenzanteile geregelt werden.

## Offenbarung der Erfindung

Die Erfindung wird durch die Merkmale der unabhängigen Ansprüche definiert.

Es wird ein Verfahren zur Regelung einer elektrischen Maschine mit einem Oberwellenregler bereitgestellt, wobei der Oberwellenregler eine Eingangstransformation, einen Regler und eine Ausgangstransformation umfasst. Das Verfahren umfasst die Schritte:

Ermitteln einer Rückführgröße, wobei die Rückführgröße eine Istgröße einer Oberwelle einer vorgegebenen Frequenz in einem feldorientierten System umfasst;

Transformieren der Rückführgröße mittels der Eingangstransformation zu einer Gleichrückführgröße in einem oberwellenorientierten System;

Ermitteln einer Regelabweichung als Differenz einer vorgebbaren Gleichführungsgröße und der Gleichrückführgröße in dem oberwellenorientierten System;

Ermitteln einer Gleichstellgröße mittels des Reglers in Abhängigkeit der Regelabweichung;

Rücktransformieren der Gleichstellgröße mittels der Ausgangstransformation zu einer Stellgröße in dem feldorientierten System;

Bestromen mindestens einer Wicklung der elektrischen Maschine in Abhängigkeit der Stellgröße.

Zur Regelung elektrischer Maschinen werden verbreitet feldorientierte Regelungen verwendet. Dabei werden die Wechselgrößen der im Zeitbereich, bevorzugt sinusförmigen, einzuregelnden Phasenströme, auch die Grundwellen genannt, mittels einer mathematischen Transformation jeweils in ein mit der Frequenz der Wechselgrößen rotierendes Koordinatensystem übertragen. Die Frequenz der Wechselgrößen bestimmt auch die Frequenz des magnetischen Feldes in der Maschine, sodass dieses mit der Frequenz der Wechselgrößen rotierende Koordinatensystem auch feldorientiertes System genannt wird. Im stationären Betrieb der elektrischen Maschine ergeben sich aus den Wechselgrößen im Zeitbereich Gleichgrößen im feldorientierten System, welche mittels der üblichen Verfahren der Regelungstechnik geregelt werden können. Das feldorientierte System wird auch d/q-Koordinatensystem genannt. Dabei zeigt dessen d-Achse in Richtung des Rotorflusses. Die q-Achse ist senkrecht zu der d-Achse. Ein sinusförmiger Phasenstrom wird als Statorstromzeiger oder Statorstromvektor repräsentiert, welcher über seine Länge und seine Richtung charakterisiert wird. Dieser Stromzeiger dreht sich synchron mit dem rotierenden Stator- oder Rotorfluss der elektrischen Maschine. In dem d/q Koordinatensystem kann der Stromzeiger entsprechend seiner Länge und seiner Richtung mittels zwei senkrecht aufeinander stehenden Komponenten Id und Iq dargestellt werden, welche im stationären Fall Gleichgrößen sind.

Zur Regelung einer mit dem Oberwellenregler verbindbaren oder anschließbaren elektrischen Maschine wird eine Rückführgröße der elektrischen Maschine in dem feldorientierten System erfasst. Diese Rückführgröße umfasst eine Oberwelle, welche den Phasenstrom durch die elektrische Maschine überlagert. In dem feldorientierten System ist der Phasenstrom eine Gleichgröße wohingegen die Oberwelle eine Wechselgröße ist. Zur Regelung der Oberwelle erfolgt daher, ähnlich der Transformation aus dem Zeitbereich in den feldorientierten Bereich, eine weitere mathematische Transformation mit einer Frequenz der Oberwelle aus dem feldorientierten System in ein oberwellenorientiertes System. Hierzu wird die Rückführgröße mittels einer Eingangstransformation zu einer Gleichrückführgröße in das oberwellenorientierte System transformiert. Größen, die im feldorientierten System als Wechselgrößen dargestellt werden, werden im stationären Betrieb der elektrischen Maschine im oberwellenorientierten System als Gleichgrößen dargestellt. Diese können mittels der üblichen Verfahren der Regelungstechnik geregelt werden. Entsprechend wird eine Regelabweichung als Differenz einer vorgebbaren Gleichführungsgröße und der Gleichrückführgröße in dem oberwellenorientierten System ermittelt. Mittels eines Reglers wird eine Gleichstellgröße in Abhängigkeit der Regelabweichung ermittelt. Diese Gleichstellgröße als Gleichgröße im oberwellenorientierten System wird zur weiteren Verwendung in der feldorientierten Regelung der elektrischen Maschine mittels der Ausgangstransformation rücktransformiert zu einer Stellgröße in dem feldorientierten System. Im feldorientierten System umfasst die Stellgröße eine Wechselgröße, eine Oberwelle. Schließlich umfasst das Verfahren einen Schritt zum Bestromen der elektrischen Maschine in Abhängigkeit der Stellgröße.

Vorteilhaft wird ein Verfahren für einen effektiven Oberwellenregler bereitgestellt.

Die Formulierung, dass eine Größe des Regelkreises eine Oberwelle oder eine Grundwelle umfasst, bedeutet im Rahmen dieser Anmeldung, dass eine Größe des Regelkreises zumindest eine Oberwelle oder Grundwelle charakterisiert oder beschreibt, wobei die jeweilige Größe des Regelkreises auch weitere Signalanteile, beispielsweise Grundwelle und eine oder mehrere Oberwellen sowie zusätzlich noch vorhandene Störgrößen beinhalten kann.

Zur Regelung elektrischer Maschinen werden verbreitet in Abhängigkeit einer Drehmomentvorgabe Soll-Phasenströme in Abhängigkeit ermittelter Ist-Phasenströme vorgegeben, wobei als Stellgrößen die Phasenspannungen eingestellt werden. Folglich umfassen bevorzugt im Rahmen dieser Anmeldung die Rückführgröße (Idq), die Gleichrückführgröße (IHrmc), die Gleichführungsgröße (IHrmc*), die Maschinen-Rückführgröße (Iabc) oder die vorgebbare GW-Gleichführungsgröße (Idq*) jeweils einen Stromwert und/ oder die Gleichstellgröße (UHrmc*), die Stellgröße (UdqHrmc*), die GW-Gleichstellgröße oder die Maschinen-Stellgröße (Uabc*) jeweils einen Spannungswert.

In einer anderen Ausgestaltung der Erfindung umfasst die Rückführgröße in dem feldorientierten System eine Oberwelle mit einer positiven Frequenz mit einer ersten Amplitude und einer ersten Phase einer k-ten Ordnung einer elektrischen Frequenz der elektrischen Maschine und/oder eine Oberwelle mit einer negativen Frequenz mit einer zweiten Amplitude und einer zweiten Phase der k-ten Ordnung einer elektrischen Frequenz der elektrischen Maschine.

Die Rückführgröße in dem feldorientierten System umfasst mindestens eine Oberwelle. Bezogen auf die elektrische Frequenz der elektrischen Maschine weist die Oberwelle oder die Oberwellen eine positive und/ oder negative Frequenz k-ter Ordnung auf mit jeweiliger Amplitude und Phasenlage. Eine Ordnung, die eine relevante Störgröße darstellt, da insbesondere deren Amplituden besonders groß sind, ist beispielsweise die 6 Ordnung, bevorzugt in positiver und negativer Richtung. Beispielsweise bei einer elektrischen Frequenz der elektrischen Maschine, also der Grundwelle, von 450 Hz im Zeitbereich, ist die Frequenz der 6. Ordnung bei 450Hz+450Hz*6= 3150Hz sowie in negativer Richtung bei 450Hz-6*450Hz=-2250Hz. Im feldorientierten System, dessen Koordinatensystem mit der elektrischen Frequenz der elektrischen Maschine rotiert, wird die elektrische Frequenz der elektrischen Maschine auf 0Hz abgebildet und es ergeben sich die Frequenzen +2700Hz und -2700 Hz für die Oberwellen +/- 6. Ordnung. In Abhängigkeit der Größe der Amplituden und der Phasenlage ergeben sich Kraftwellen zwischen Rotor und Stator der elektrischen Maschine, die als tangentiale und radiale Zahnkräfte auf die Statorzähne wirken und die harmonischen Oberschwingungen des Drehmomentes bewirken. Je mehr relevante Ordnungen der Rückführgrößen für die Regelung berücksichtigt werden, desto effektiver werden die Störgrößen ausgeregelt.

Vorteilhaft wird eine Rückführgröße bereitgestellt für eine effektive Oberwellenregelung.

In einer anderen Ausgestaltung der Erfindung erfolgt das Transformieren der Rückführgröße in Abhängigkeit eines ermittelten aktuellen Rotorwinkels der elektrischen Maschine und umfasst eine Drehung mit einem Drehwinkel, der dem k-fachen des aktuellen Rotorwinkels entspricht. Die Drehung wird dabei in positive Richtung und/ oder negative Richtung ausgeführt.

Die Transformation aus dem feldorientierten System in das oberwellenorientierte System umfasst eine Drehung mittels einer Drehmatrix oder Rotationsmatrix. Eine Wechselgröße im feldorientierten System wird somit zu einer Gleichgröße im oberwellenorientierten System. Hierzu wird die Rückführgröße mit einem Drehwinkel, der dem k-fachen des aktuellen Rotorwinkels entspricht gedreht, also bei der Transformation der Oberwelle der 6. Ordnung der elektrischen Frequenz mit dem 6-fachen des aktuellen Rotorwinkels. Für die Oberwellen der k-ten Ordnung in positiver Richtung erfolgt die Drehung in positive Richtung, bei den Oberwellen der k-ten Ordnung in negativer Richtung erfolgt die Drehung in negative Richtung. Die resultierenden Gleichgröße im oberwellenorientierten System können mittels komplexer Zahlen oder als komplexe Parameter, bspw. als iPosReal, iPosImag bzw. als iNegReal und iNegImag angegeben, charakterisiert oder beschrieben werden.

Neben der Drehung sind alternativ auch andere Transformationen verwendbar. Beispielsweise kann auch durch Multiplikation von dem d-Strom mit dem Sinus abhängig von dem k-fachen Rotorwinkel sowie mit dem Kosinus die komplexen Anteile iDSin, IDCos und durch Multiplikation von dem q-Strom mit dem Sinus sowie mit dem Kosinus die komplexen Anteile iQSin, IQCos berechnet werden (auch Frequenzmixen oder Heterodyning gennant).

Als eine weitere alternative Beschreibung können komplexe Oberwellen mit Amplitude und Phase jeweils von dem d-Strom und q-Strom verwendet werden.

Ebenso lassen sich die Anteile auch als Ellipse mit Höhe, Breite, Drehung und Phase durch eine Überlagerung von zwei gegenläufig drehenden Zeigern mit unterschiedlicher Amplitude und Phase darstellen, bevorzugt für eine besonders effiziente Kalibrierung.

Vorteilhaft werden Transformationen bereitgestellt zur Bereitstellung von Gleichgrößen, die eine effektive Oberwellenregelung ermöglichen.

In einer anderen Ausgestaltung der Erfindung umfasst die vorgebbare Gleichführungsgröße des oberwellenorientierten Systems eine Sollgröße in dem oberwellenorientierten System zur Erzeugung einer Oberwelle auf einem sinusförmigen Phasenstroms zur Bestromung mindestens einer Wicklung der elektrischen Maschine.

Die Gleichführungsgröße ist ein Sollwert zur Erzeugung einer Oberwelle einer vorgebbaren Frequenz oder k-ten Ordnung der elektrischen Frequenz der elektrischen Maschine zur Überlagerung des sinusförmigen Phasenstroms oder der Grundwelle zur Bestromung der elektrischen Maschine. Dieser Sollwert wird insbesondere in Abhängigkeit einer Drehmomentvorgabe, eines (Phasen-)Strom-sollwertes oder eines Ist-Stromwertes, eines ermittelten Phasenstroms analytisch oder mittels Kennfeld vorgegeben. Zur Verwendung im Oberwellenregler im oberwellenorientierten System wird er bereits entsprechend transformiert vorgegeben.

Vorteilhaft wird eine Gleichführungsgröße bereitgestellt für eine effektive Oberwellenregelung.

Das Ermitteln der Gleichstellgröße mittels des Reglers erfolgt in Abhängigkeit der Regelabweichung mittels einer

Regelung, mit einem PI- oder I- Regler, einem inversen statisch oder dynamischen Modell und einem PI- oder I- Reglers oder einem Regler mit inversen statisch oder dynamischen Modell.

Bei der Verwendung eines PI- oder I-Reglers werden für jeden Oberwellen-Stromanteil, also beispielsweise iPosReal, iPoslmag, iNegReal und/ oder iNeglmag einzelne, voneinander getrennte Regler verwendet.

Bei der Verwendung eines inversen statischen oder dynamischen Modells und einem PI- oder I- Reglers werden Regelabweichungen oder Stromabweichungen mit einem inversen Modell in Spannungs-Abweichungen umgerechnet. Anschließend werden für jeden Oberwellen-Spannungsanteil, also beispielsweise uPos-Real, uPoslmag, uNegReal und/ oder uNeglmag einzelne, voneinander getrennte PI- oder I-Regler verwendet. Das Modell wird aus einem d/q-Modell oder feldorientierten Modell der elektrischen Maschine berechnet. Das Modell kann statisch ausgelegt sein oder auch dynamische Anteile berücksichtigen. Eine Regelung mit einem Modell, welches dynamische Anteile berücksichtigt, ist genauer und erlaubt eine höhere Reglerdynamik.

Bei der Verwendung eines Reglers mit einem inversen Modell (bekannt als IMC Regler (internal model control)) oder CVD Regler (complex vector design)) entspricht der inverse Regler dem inversen Modell der Regelstrecke multipliziert mit einem Integrator. Für einen geschlossenen Regelkreis T gilt:

$$T = \frac{\omega_{BW}}{\omega_{BW} + s}$$

$$T = \frac{GK}{1 + GK}$$

$$K = \frac{\omega_{BW}}{sG}$$

Wobei die Variablen für folgende Größen stehen:

G: Maschinen Modell
K: Regler Modell
T: geschlossener Regelkreis
$\omega_{BW}$: Bandbreite
s: Laplace

Die einzelnen Anteile z.B.: iPosReal, iPoslmag, iNegReal und iNeglmag werden dabei nicht mehr getrennt geregelt. Es wird lediglich die Grenzfrequenz vom gewünschten Tiefpassverhalten des geschlossenen Regelkreises vorgegeben.

Da sich mit diesem Regler der geschlossene Regelkreis zu einem Tiefpassverhalten ergibt, ist ein weiterer Tiefpass im Regelkreis nicht sinnvoll. Auch bei dieser Variante ist eine Regelung mit einem Modell, welches dynamische Anteile berücksichtigt, genauer.

Vorteilhaft werden unterschiedliche Regler für eine effektive Oberwellenregelung bereitgestellt.

In einer anderen Ausgestaltung der Erfindung erfolgt das Rücktransformieren der Gleichstellgröße in Abhängigkeit eines ermittelten aktuellen Rotorwinkels der elektrischen Maschine. Das Rücktransformieren umfasst eine Drehung mit einem Drehwinkel, der dem k-fachen des aktuellen Rotorwinkels entspricht. Das Rücktransformieren umfasst jeweils eine Drehung in positive und/ oder negative entgegengesetzter Richtung des Drehens der Rückführgröße mittels der Eingangstransformation.

Die Transformation aus dem oberwellenorientierten System in das feldorientierte System umfasst eine Drehung mittels einer Drehmatrix oder Rotationsmatrix. Eine Gleichgröße im oberwellenorientierten System wird so zu einer Wechselgröße im feldorientierten System. Hierzu wird die Gleichstellgröße mit einem Drehwinkel, der dem k-fachen des aktuellen Rotorwinkels entspricht gedreht, also bei der Transformation der Oberwelle der 6. Ordnung der elektrischen Frequenz mit dem 6-fachen des aktuellen Rotorwinkels. Für die Oberwellen der k-ten Ordnung in positiver Richtung erfolgt die Drehung in positive Richtung, bei den Oberwellen der k-ten Ordnung in negativer Richtung erfolgt die Drehung in negative Richtung. Bevorzugt werden bei einer Drehung in negative und positive Richtung die resultierenden Wechselgrößen im feldorientierten System komplex addiert zu der Stellgröße.

Neben der Drehung sind alternativ auch andere, wie oben beschriebene, Transformationen verwendbar.

Vorteilhaft werden Rücktransformationen bereitgestellt zur Bereitstellung von Wechselgrößen, die für eine effektive Grundwellenregelung weiterverwendet werden können.

In einer anderen Ausgestaltung des Verfahrens zur Regelung einer elektrischen Maschine umfasst diese weiter einen Grundwellenregler, wobei der Grundwellenregler eine GW-Eingangstransformation, einen GW-Regler und eine GW-Ausgangstransformation umfasst. Das Verfahren umfasst die weiteren Schritte: Ermitteln einer Maschinen-Rückführgröße, wobei die Maschinenrückführgröße eine Istgröße der elektrischen Maschine umfasst;

Transformieren der Maschinen-Rückführgröße mittels der GW-Eingangstransformation zu der Rückführgröße in dem feldorientierten System; Ermitteln der GW-Regelabweichung als Differenz einer vorgebbaren GW-Gleichführungsgröße und der Rückführgröße in dem feldorientierten System; Ermitteln einer GW-Gleichstellgröße mittels des GW-Reglers in Abhängigkeit der GW-Regelabweichung; Überlagern der GW-Gleichstellgröße mit der Stellgröße; Rücktransformieren der Ausgangsgröße der Überlagerung mittels der GW-Ausgangstransformation zu einer Maschinen-Stellgröße und Bestromen mindestens einer Wicklung der elektrischen Maschine in Abhängigkeit der Maschinen-Stellgröße.

Neben der Oberwellenregelung umfasst die Regelung eine Grundwellenregelung. Mittels der Grundwellenregelung werden die Wechselgrößen der im Zeitbereich, bevorzugt sinusförmigen, einzuregelnden Phasenströme geregelt. Zur Regelung einer mit dem Grundwellenregler verbindbaren oder anschließbaren elektrischen Maschine wird eine Maschinen-Rückführgröße, eine Istgröße, der elektrischen Maschine im Zeitbereich erfasst. Die Maschinen-Rückführgrößen sind bevorzugt die Phasenströme einer elektrischen Maschine. Diese Maschinen-Rückführgröße umfasst den Phasenstrom als Grundwelle und als Störgrößen Oberwellen, welche den Phasenstrom durch die elektrische Maschine überlagern. In dem Zeitbereich ist der Phasenstrom eine Wechselgröße welche mit weiteren Wechselgrößen der Oberwellen überlagert ist. Zur Regelung der Grundwelle erfolgt eine Transformation aus dem Zeitbereich in den feldorientierten Bereich. Hierzu wird die Maschinen-Rückführgröße mittels einer GW-Eingangstransformation zu der Rückführgröße in dem feldorientierten System transformiert. Bevorzugt steht "GW" im Rahmen dieser Anmeldung als Kennzeichnung für die Regelschritte und Transformationen, die für die Regelung der Grundwelle verwendet werden. Im stationären Betrieb der elektrischen Maschine ergeben Wechselgrößen im Zeitbereich Gleichgrößen im feldorientierten System. Diese können mittels der üblichen Verfahren der Regelungstechnik geregelt werden. Entsprechend wird eine GW-Regelabweichung als Differenz einer vorgebbaren GW-Gleichführungsgröße und der Rückführgröße in dem feldorientierten System ermittelt. Mittels eines GW-Reglers wird eine GW-Gleichstellgröße in Abhängigkeit der GW-Regelabweichung ermittelt. Die Stellgröße als Ausgangssignal des Oberwellenreglers wird mit der GW-Gleichstellgröße im feldorientierten System überlagert oder addiert. Diese Ausgangsgröße der Überlagerung im feldorientierten System wird zur weiteren Verwendung zur Ansteuerung oder Bestromung der elektrischen Maschine im Zeitbereich mittels der GW-Ausgangstransformation rücktransformiert zu einer Maschinen-Stellgröße in dem Zeitbereich. Im Zeitbereich umfasst die Maschinen-Stellgröße eine Wechselgröße, eine Grundwelle, und mindestens eine weitere überlagerte Wechselgröße, eine Oberwelle. Schließlich umfasst das Verfahren einen Schritt zum Bestromen der elektrischen Maschine in Abhängigkeit der Maschinen-Stellgröße.

Vorteilhaft wird ein Verfahren für einen effektiven Grundwellen- und Oberwellenregler bereitgestellt.

In einer anderen Ausgestaltung der Erfindung umfasst die vorgebbare GW-Gleichführungsgröße des feldorientierten Systems eine Sollgröße zur Erzeugung der Grundwelle eines sinusförmigen Phasenstroms zur Bestromung mindestens einer Wicklung der elektrischen Maschine.

Die GW-Gleichführungsgröße ist ein Sollwert zur Erzeugung einer Grundwelle mit der elektrischen Frequenz der elektrischen Maschine zur Bestromung der elektrischen Maschine. Dieser Sollwert wird insbesondere in Abhängigkeit einer Drehmomentvorgabe, eines (Phasen-)Stromsollwertes oder eines Ist-Stromwertes, bevorzugt eines ermittelten Phasenstroms, analytisch oder mittels Kennfeld vorgegeben. Zur Verwendung im GW-Regler im feldorientierten System wird er bereits entsprechend transformiert vorgegeben.

Vorteilhaft wird eine GW-Gleichführungsgröße bereitgestellt für eine effektive Grundwellenregelung.

Ferner betrifft die Erfindung ein Computerprogramm, welches Befehle umfasst, die bei der Ausführung durch einen Computer diesen veranlassen, die Schritte des bisher beschriebenen Verfahrens auszuführen.

Ferner betrifft die Erfindung ein computerlesbares Speichermedium, umfassend Befehle, die bei der Ausführung durch einen Computer diesen veranlassen, die Schritte des bisher beschriebenen Verfahrens auszuführen.

Ferner betrifft die Erfindung eine Vorrichtung zur Regelung einer elektrischen Maschine, mit einer Recheneinheit und einem Oberwellenregler, wobei der Oberwellenregler eine Eingangstransformation, einen Regler und eine Ausgangstransformation umfasst. Die Vorrichtung ist dazu eingerichtet, die Schritte des beschriebenen Verfahrens auszuführen.

Vorteilhaft wird eine Vorrichtung für eine effektive Oberwellenregelung einer elektrischen Maschine bereitgestellt.

In einer anderen Ausgestaltung der Erfindung umfasst die Vorrichtung einen Grundwellenregler, wobei der Grundwellenregler eine GW-Eingangstransformation, einen GW-Regler und eine GW-Ausgangstransformation umfasst. Die Vorrichtung ist dazu eingerichtet, die Schritte des beschriebenen Verfahrens auszuführen.

Vorteilhaft wird eine Vorrichtung für eine effektive, kombinierte Grundwellen- und Oberwellenregelung einer elektrischen Maschine bereitgestellt.

Ferner betrifft die Erfindung ein elektrisches Antriebssystem mit einer elektrischen Maschine und einer beschriebenen Vorrichtung. Ein derartiges elektrisches Antriebssystem dient beispielsweise dem Antrieb eines elektrischen Fahrzeugs. Mittels des Verfahrens und der Vorrichtung wird ein optimierter Betrieb des Antriebstrangs ermöglicht.

Ferner betrifft die Erfindung ein Fahrzeug, mit einem beschriebenen Antriebssystem. Vorteilhaft wird somit ein Fahrzeug bereitgestellt, welches eine Vorrichtung umfasst, mit der eine elektrische Maschine effektiv geregelt wird.

Es versteht sich, dass die Merkmale, Eigenschaften und Vorteile des erfindungsgemäßen Verfahrens entsprechend auf die Vorrichtung bzw. das Antriebssystem und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnung

Im Folgenden soll die Erfindung anhand einiger Figuren näher erläutert werden, dazu zeigen:

Figur 1
eine schematische Regelstruktur eines Oberwellenreglers

Figur 2
eine schematische Regelstruktur zur Regelung einer elektrischen Maschine

Figur 3
ein schematisch dargestelltes Ablaufdiagramm für ein Verfahren zur Regelung einer elektrischen Maschine.

Figur 4
eine schematische dargestellte Vorrichtung zur Regelung einer elektrischen Maschine

Figur 5
ein schematisch dargestelltes Fahrzeug mit einem elektrischen Antriebssystem

Ausführungsformen der Erfindung

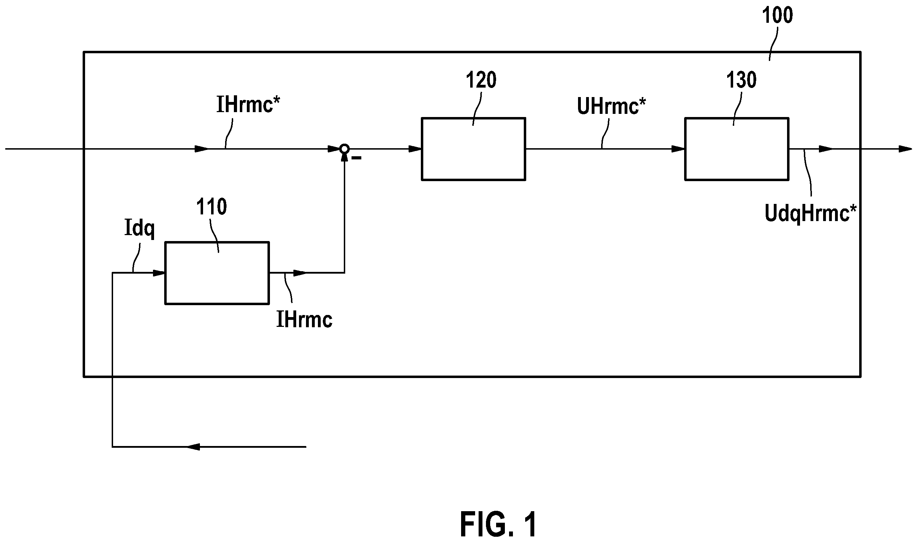

Die Figur 1 zeigt eine schematische Regelstruktur eines Oberwellenreglers 100, wobei der Oberwellenregler 100 eine Eingangstransformation 110, einen Regler 120 und eine Ausgangstransformation 130 umfasst. Eine ermittelte Rückführgröße Idq in einem feldorientierten System wird mittels der Eingangstransformation 110 zu einer Gleichrückführgröße IHrmc in einem oberwellenorientierten System transformiert. Eine ermittelte Differenz aus einer vorgebbaren Gleichführungsgröße IHrmc* und der Gleichrückführgröße IHrmc in dem oberwellenorientierten System wird als Regelabweichung und Eingangsgröße dem Regler 120 zugeführt. Mittels des Reglers 120 wird in Abhängigkeit von der Regelabweichung eine Gleichstellgröße UHrmc* ermittelt. Diese Gleichstellgröße UHrmc* im oberwellenorientierten System wird mittels der Ausgangstransformation 130 zu einer Stellgröße UdqHrmc* in dem feldorientierten System transformiert. Bevorzugt wird mindestens eine Wicklung einer elektrischen Maschine 190 in Abhängigkeit der Stellgröße UdqHrmc* bestromt.

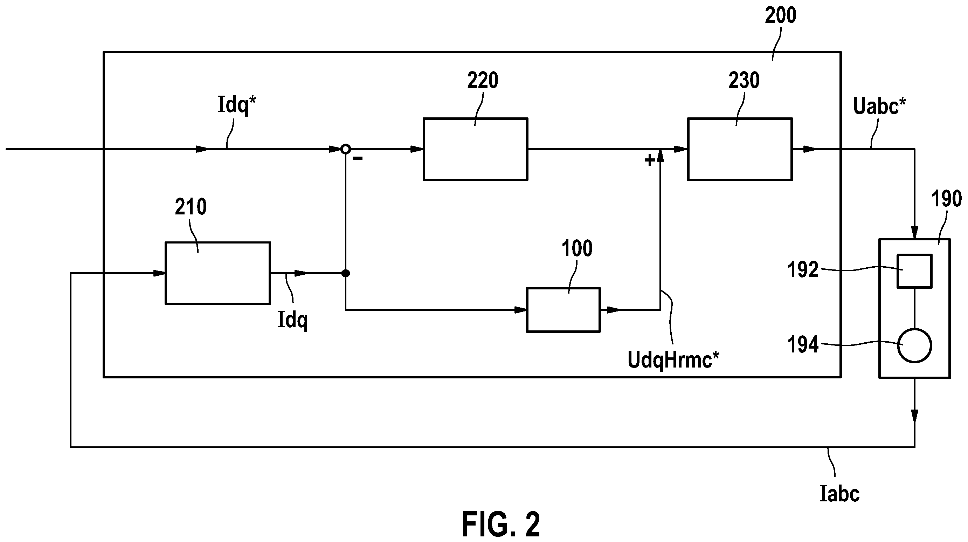

Die Figur 2 zeigt eine schematische Regelstruktur zur Regelung einer elektrischen Maschine 190. Die elektrische Maschine 190 ist als eine Einheit aus Inverter 192 und eines elektrischen Motors 194 dargestellt. Der Grundwellenregler 200 umfasst eine GW-Eingangstransformation 210, einen GW-Regler 220 und eine GW-Ausgangstransformation 230. Eine Maschinen-Rückführgröße Iabc der elektrischen Maschine wird im Zeitbereich ermittelt und der GW-Eingangstransformation 210 zugeführt. Die Maschinen-Rückführgröße Iabc wird mittels der GW-Eingangstransformation 210 zu der Rückführgröße Idq in das feldorientierte System transformiert. Als Differenz einer vorgebbaren GW-Gleichführungsgröße Idq* und der Rückführgröße (Idq) in dem feldorientierten System wird eine GW-Regelabweichung ermittelt. In Abhängigkeit der GW-Regelabweichung wird eine GW-Gleichstellgröße mittels des GW-Reglers 220 ermittelt. Wie in Figur 1 dargestellt wird parallel mittels des Oberwellenreglers 100 die Stellgröße UdqHrmc* ermittelt. Die GW-Gleichstellgröße wird mit der Stellgröße UdqHrmc* überlagert. Die Ausgangsgröße der Überlagerung im feldorientierten System wird mittels der GW-Ausgangstransformation 230 zu einer Maschinen-Stellgröße Uabc* in den Zeitbereich transformiert. Die Maschinen-Stellgröße Uabc*, bevorzugt eine Phasenspannung, wird zur Bestromung mindestens einer Wicklung der elektrischen Maschine 190 dieser bereitgestellt. Mittels des Inverters 192 wird die Phasenspannung generiert und mindestens an einer Wicklung des elektrischen Motors 194 angelegt.

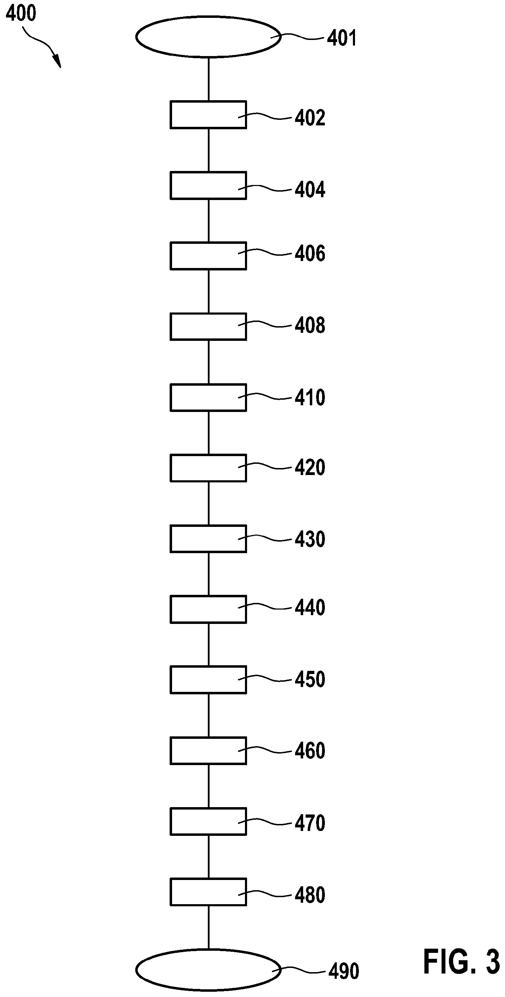

Die Figur 3 zeigt ein schematisch dargestelltes Ablaufdiagramm für ein Verfahren 400 zur Regelung einer elektrischen Maschine 190. Mit Schritt 401 beginnt das Verfahren. Bevorzugt wird in Schritt 402 eine Maschinen-Rückführgröße labc der elektrischen Maschine im Zeitbereich ermittelt. Bevorzugt wird in Schritt 404 diese Maschinen-Rückführgröße labc mittels der GW-Eingangstransformation 210 zu der Rückführgröße Idq in das feldorientierte System transformiert. Bevorzugt wird in Schritt 406, als Differenz einer vorgebbaren GW-Gleichführungsgröße Idq* und der Rückführgröße (Idq) in dem feldorientierten System, eine GW-Regelabweichung ermittelt. Bevorzugt wird in Schritt 408 in Abhängigkeit der GW-Regelabweichung eine GW-Gleichstellgröße mittels des GW-Reglers 220 ermittelt.

In Schritt 410 wird eine Rückführgröße Idq ermittelt und in Schritt 420 mittels der Eingangstransformation 110 zu einer Gleichrückführgröße IHrmc in ein oberwellenorientiertes System transformiert. In Schritt 430 wird eine Differenz aus einer vorgebbaren Gleichführungsgröße IHrmc* und der Gleichrückführgröße IHrmc als Regelabweichung und Eingangsgröße dem Regler 120 zugeführt. In Schritt 440 wird mittels des Reglers in Abhängigkeit von der Regelabweichung eine Gleichstellgröße UHrmc* ermittelt. In Schritt 450 wird diese Gleichstellgröße UHrmc* im oberwellenorientierten System mittels der Ausgangstransformation zu einer Stellgröße UdqHrmc* in dem feldorientierten System transformiert. Bevorzugt wird in Schritt 480 mindestens eine Wicklung einer elektrischen Maschine 190 in Abhängigkeit der Stellgröße UdqHrmc* bestromt.

Bevorzugt wird In Schritt 460 die GW-Gleichstellgröße mit der Stellgröße UdqHrmc* überlagert. Bevorzugt wird in Schritt 470 die Ausgangsgröße der Überlagerung im feldorientierten System mittels der GW-Ausgangstransformation 230 zu einer Maschinen-Stellgröße Uabc* in den Zeitbereich transformiert. Bevorzugt wird in Schritt 480 mindestens eine Wicklung der elektrischen Maschine 190 in Abhängigkeit der Maschinen-Stellgröße Uabc* bestromt. Mit Schritt 490 endet das Verfahren.

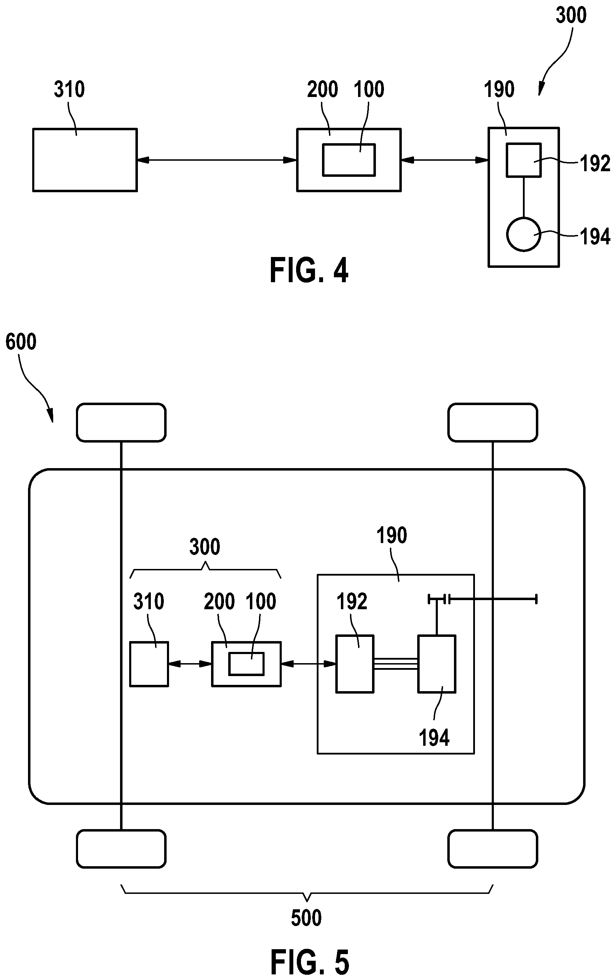

Die Figur 4 zeigt eine schematische dargestellte Vorrichtung 300 zur Regelung einer elektrischen Maschine 190. Die elektrische Maschine 190 ist als eine Einheit aus Inverter 192 und eines elektrischen Motors 194 dargestellt. Die Vorrichtung 300 umfasst einen Oberwellenregler 100 und eine Recheneinheit 310 zur Steuerung und Umsetzung der Struktur des Oberwellenreglers 100. Die Vorrichtung umfasst bevorzugt einen Grundwellenregler 200, der ebenfalls mittels der Recheneinheit 310 gesteuert und umgesetzt wird. Die Vorrichtung ist dazu eingerichtet die oben beschriebenen Verfahrensschritte auszuführen und somit die elektrischen Maschine 190 zu betreiben und zu regeln.

Die Figur 5 zeigt ein schematisch dargestelltes Fahrzeug 600, welches ein elektrisches Antriebssystem 500 umfasst. Das Antriebssystem 500 umfasst die elektrische Maschine 190, welche einen Inverter 192 und einen elektrischen Motor 194 umfasst, und eine Vorrichtung 300 zur Regelung der elektrischen Maschine, wie in Figur 4 beschrieben. Bevorzugt umfasst das elektrische Antriebssystem eine Batterie zur Versorgung des elektrischen Antriebssystems 500 mit elektrischer Energie.

## Patentansprüche

1. Verfahren (400) zur Regelung einer elektrischen Maschine (190),

   mit einem Oberwellenregler (100),
   wobei der Oberwellenregler eine Eingangstransformation (110), einen Regler (120) und eine Ausgangstransformation (130) umfasst, mit den Schritten:

   Ermitteln (410) einer Rückführgröße (Idq) der elektrischen Maschine, wobei die Rückführgröße eine Istgröße einer Oberwelle einer vorgegebenen Frequenz in einem feldorientierten System umfasst;
   Transformieren (420) der Rückführgröße (Idq) mittels der Eingangstransformation (110) zu einer Gleichrückführgröße (IHrmc) in einem oberwellenorientierten System;
   Ermitteln (430) einer Regelabweichung als Differenz einer vorgebbaren Gleichführungsgröße (IHrmc*) und der Gleichrückführgröße (IHrmc) in dem oberwellenorientierten System;
   Ermitteln (440) einer Gleichstellgröße (UHrmc*) mittels des Reglers (120) in Abhängigkeit der Regelabweichung;
   Rücktransformieren (450) der Gleichstellgröße (UHrmc*) mittels der Ausgangstransformation zu einer Stellgröße (UdqHrmc*) in dem feldorientierten System;
   Bestromen (480) mindestens einer Wicklung der elektrischen Maschine (190) in Abhängigkeit der Stellgröße (UdqHrmc*), wobei

   das Ermitteln (440) der Gleichstellgröße (UHrmc*) mittels des Reglers (120) in Abhängigkeit der Regelabweichung mittels einer Regelung erfolgt, mit:

   einem inversen statisch oder dynamischen Modell und einem PI- oder I-Reglers oder
einem Regler mit inversen statisch oder dynamischen Modell,
**dadurch gekennzeichnet, dass**
bei der Verwendung des inversen Modells Regelabweichungen oder Stromabweichungen mit dem inversen Modell in Spannungs-Abweichungen umgerechnet werden.

2.	Verfahren nach Anspruch 1, wobei
die Rückführgröße (Idq) in dem feldorientierten System eine Oberwelle mit einer positiven Frequenz mit einer ersten Amplitude und einer ersten Phase einer k-ten Ordnung einer elektrischen Frequenz der elektrischen Maschine (190) und/oder eine Oberwelle mit einer negativen Frequenz mit einer zweiten Amplitude und einer zweiten Phase der k-ten Ordnung einer elektrischen Frequenz der elektrischen Maschine (190) umfasst.

3.	Verfahren nach Anspruch 2, wobei

das Transformieren (420) der Rückführgröße (Idq) in Abhängigkeit eines ermittelten aktuellen Rotorwinkels (w) der elektrischen Maschine (190) erfolgt und das Transformieren (420) eine Drehung mit einem Drehwinkel umfasst, der dem k-fachen des aktuellen Rotorwinkels (w) entspricht,
und die Drehung (420) in positive Richtung und/oder negative Richtung ausgeführt wird.

4.	Verfahren nach einem der vorhergehenden Ansprüche, wobei
die vorgebbare Gleichführungsgröße (IHrmc*) des oberwellenorientierten Systems eine Sollgröße in dem oberwellenorientierten System umfasst, zur Erzeugung einer Oberwelle auf einem sinusförmigen Phasenstroms zur Bestromung mindestens einer Wicklung der elektrischen Maschine (190).

5.	Verfahren nach Anspruch 1, wobei

das Rücktransformieren (450) der Gleichstellgröße (UHrmc*) in Abhängigkeit eines ermittelten aktuellen Rotorwinkels (w) der elektrischen Maschine (190) erfolgt
und das Rücktransformieren (450) eine Drehung mit einem Drehwinkel umfasst, der dem k-fachen des aktuellen Rotorwinkels (w) entspricht,
und das Rücktransformieren (450) jeweils eine Drehung in positiver und/ oder negativer entgegengesetzter Richtung des Drehens der Rückführgröße (Idq) mittels der Eingangstransformation (110) umfasst.

6.	Verfahren nach Anspruch 1,

mit einem Grundwellenregler (200),
wobei der Grundwellenregler eine GW-Eingangstransformation (210), einen GW-Regler (220) und eine GW-Ausgangstransformation (230) umfasst,
mit den Schritten:

Ermitteln (402) einer Maschinen-Rückführgröße (Iabc), wobei die Maschinenrückführgröße eine Istgröße der elektrischen Maschine umfasst;
Transformieren (404) der Maschinen-Rückführgröße (Iabc) mittels der GW-Eingangstransformation (210) zu der Rückführgröße (Idq) in dem feldorientierten System;
Ermitteln (406) der GW-Regelabweichung als Differenz einer vorgebbaren GW-Gleichführungsgröße (Idq*) und der Rückführgröße (Idq) in dem feldorientierten System;
Ermitteln (408) einer GW-Gleichstellgröße mittels des GW-Reglers (220) in Abhängigkeit der GW-Regelabweichung;
Überlagern (460) der GW-Gleichstellgröße mit der Stellgröße (UdqHrmc*);
Rücktransformieren (470) der Ausgangsgröße der Überlagerung mittels der GW-Ausgangstransformation (230) zu einer Maschinen-Stellgröße (Uabc*), und Bestromen (480) mindestens einer Wicklung der elektrischen Maschine (190) in Abhängigkeit der Maschinen-Stellgröße (Uabc*).

7.	Verfahren nach Anspruch 6, wobei
die vorgebbaren GW-Gleichführungsgröße (Idq*) des feldorientierten Systems eine Sollgröße zur Erzeugung der Grundwelle eines sinusförmigen Phasenstroms zur Bestromung mindestens einer Wicklung der elektrischen Maschine (190) umfasst.

8.	Computerprogramm, umfassend Befehle, die bei der Ausführung des Programms durch eine Vorrichtung nach Anspruch 10 diese veranlassen, das Verfahren/die Schritte des Verfahrens nach Anspruch 1 bis 7 auszuführen.

9.	Computerlesbares Speichermedium, umfassend Befehle, die bei der Ausführung durch eine Vorrichtung nach Anspruch 10 diese veranlassen, das Verfahren/die Schritte des Verfahrens nach Anspruch 1 bis 7 auszuführen. Verfahrens (400) nach Anspruch 1 bis 7 auszuführen.

10.	Vorrichtung (300) zur Regelung einer elektrischen Maschine (190),

mit einer Recheneinheit (310) und einem Oberwellenregler (100),

wobei der Oberwellenregler eine Eingangstransformation (110), einen Regler (120) und eine Ausgangstransformation (130) umfasst,

wobei die Vorrichtung dazu eingerichtet ist, die Schritte des Verfahrens nach einem der Ansprüche 1-5 auszuführen.

11. Vorrichtung (300) nach Anspruch 10,

mit einem Grundwellenregler (200),

wobei der Grundwellenregler eine GW-Eingangstransformation (210), einen GW-Regler (220) und eine GW-Ausgangstransformation (230) umfasst,

wobei die Vorrichtung dazu eingerichtet ist, die Schritte des Verfahrens nach einem der Ansprüche 6-7 auszuführen.

12. Elektrisches Antriebssystem (500) mit einer elektrischen Maschine (190) und einer Vorrichtung (300) nach einem der Ansprüche 10 bis 11.

13. Fahrzeug (600) mit einem elektrischen Antriebssystem (500) nach Anspruch 12.

**Claims**

1. Method (400) for controlling an electric machine (190)

having a harmonic controller (100),
the harmonic controller comprising an input transformer (110), a controller (120) and an output transformer (130),
comprising the steps of:

ascertaining (410) a feedback variable (Idq) of the electric machine, the feedback variable comprising an actual variable of a harmonic of a specified frequency in a field-oriented system;
transforming (420) the feedback variable (Idq) by means of the input transformer (110) to form a DC feedback variable (IHrmc) in a harmonic-oriented system;
ascertaining (430) a control deviation as the difference between a specifiable DC reference variable (IHrmc*) and the DC feedback variable (IHrmc) in the harmonic-oriented system;
ascertaining (440) a DC manipulated variable (UHrmc*) by means of the controller (120) as a function of the control deviation;
back-transforming (450) the DC manipulated variable (UHrmc*) by means of the output transformer to form a manipulated variable (UdqHrmc*) in the field-oriented system;
energizing (480) at least one winding of the electric machine (190) as a function of the manipulated variable (UdqHrmc*),
wherein
the DC manipulated variable (UHrmc*) is ascertained (440) by means of the controller (120) as a function of the control deviation by means of a control operation, using:

an inverse static or dynamic model and a PI or I controller or
a controller with an inverse static or dynamic model,
**characterized in that**,
when the inverse model is used, control deviations or current deviations are converted into voltage deviations using the inverse model.

2. Method according to Claim 1, wherein
the feedback variable (Idq) in the field-oriented system comprises a harmonic with a positive frequency with a first amplitude and a first phase of a kth order of an electrical frequency of the electric machine (190) and/or a harmonic with a negative frequency with a second amplitude and a second phase of the kth order of an electrical frequency of the electric machine (190).

3. Method according to Claim 2, wherein

transforming (420) the feedback variable (Idq) is performed as a function of an ascertained current rotor angle (w) of the electric machine (190), and transforming (420) comprises rotation with a rotation angle which corresponds to k times the current rotor angle (w),
and the rotation (420) is executed in the positive direction and/or the negative direction.

4. Method according to one of the preceding claims, wherein
the specifiable DC reference variable (IHrmc*) of the harmonic-oriented system comprises a target value in the harmonic-oriented system, for generating a harmonic on a sinusoidal phase current for energizing at least one winding of the electric machine (190).

5. Method according to Claim 1, wherein

the DC manipulated variable (UHrmc*) is back-transformed (450) as a function of an ascertained current rotor angle (w) of the electric machine (190), and back-transforming (450) comprises rotation with a rotation angle which corresponds to k times the current rotor angle (w),
and back-transforming (450) respectively comprises rotation in the positive and/or negative opposite direction to the rotation of the feedback variable (Idq) by means of the input transformer (110).

6. Method according to Claim 1,

    having a fundamental controller (200),
    the fundamental controller comprising a fundamental input transformer (210), a fundamental controller (220) and a fundamental output transformer (230), comprising the steps of:

        ascertaining (402) a machine feedback variable (Iabc), the machine feedback variable comprising an actual variable of the electric machine;
        transforming (404) the machine feedback variable (Iabc) by means of the fundamental input transformer (210) to form the feedback variable (Idq) in the field-oriented system;
        ascertaining (406) the fundamental control deviation as the difference between a specifiable fundamental DC reference variable (Idq*) and the feedback variable (Idq) in the field-oriented system;
        ascertaining (408) a fundamental DC manipulated variable by means of the fundamental controller (220) as a function of the fundamental control deviation;
        superimposing (460) the fundamental DC manipulated variable with the manipulated variable (UdqHrmc*);
        back-transforming (470) the output variable of the superimposition by means of the fundamental output transformer (230) to form a machine manipulated variable (Uabc*), and
        energizing (480) at least one winding of the electric machine (190) as a function of the machine manipulated variable (Uabc*).

7. Method according to Claim 6, wherein the specifiable fundamental DC reference variable (Idq*) of the field-oriented system comprises a target variable for generating the fundamental of a sinusoidal phase current for energizing at least one winding of the electric machine (190).

8. Computer program, comprising commands which, when the program is executed by a device according to Claim 10, cause said device to execute the method/the steps of the method according to Claims 1 to 7.

9. Computer-readable storage medium, comprising commands which, when executed by a device according to Claim 10, cause said device to execute the method/the steps of the method according to Claims 1 to 7.

10. Device (300) for controlling an electric machine (190),

    comprising a computer unit (310) and a harmonic controller (100),
    the harmonic controller comprising an input transformer (110), a controller (120) and an output transformer (130),
    wherein the device is designed to execute the steps of the method according to one of Claims 1-5.

11. Device (300) according to Claim 10,

    comprising a fundamental controller (200),
    the fundamental controller comprising a fundamental input transformer (210), a fundamental controller (220) and a fundamental output transformer (230), wherein the device is designed to execute the steps of the method according to either of Claims 6-7.

12. Electric drive system (500) comprising an electric machine (190) and a device (300) according to either of Claims 10 to 11.

13. Vehicle (600) comprising an electric drive system (500) according to Claim 12.

**Revendications**

1. Procédé (400) de régulation d'une machine électrique (190),

    avec un régulateur d'harmoniques (100),
    le régulateur d'harmoniques comprenant une transformation d'entrée (110), un régulateur (120) et une transformation de sortie (130),
    comprenant les étapes suivantes :

        détermination (410) d'une variable de rétroaction (Idq) de la machine électrique, ladite variable de rétroaction comprenant une variable réelle d'une harmonique d'une fréquence prédéfinie dans un système orienté champ ;
        transformation (420) de la variable de rétroaction (Idq) au moyen de la transformation d'entrée (110) en une variable de rétroaction continue (IHrmc) dans un système orienté harmonique ;
        détermination (430) d'un écart de régulation en tant que différence entre une variable de référence continue (IHrmc*) pouvant être prédéfinie et la variable de rétroaction continue (IHrmc) dans le système orienté harmonique ;

détermination (440) d'une variable de commande continue (UHrmc*) au moyen du régulateur (120) en fonction de l'écart de régulation ;

transformation inverse (450) de la variable de commande continue (UHrmc*) au moyen de la transformation de sortie en une variable de commande (UdqHrmc*) dans le système orienté champ ;

alimentation électrique (480) d'au moins un enroulement de la machine électrique (190) en fonction de la variable de commande (UdqHrmc*),

la détermination (440) de la variable de commande continue (UHrmc*) au moyen du régulateur (120) étant effectuée en fonction de l'écart de régulation au moyen d'une régulation, avec :

un modèle statique ou dynamique inverse et un régulateur PI ou I ou un régulateur avec un modèle statique ou dynamique inverse,
**caractérisé en ce que**
lors de l'utilisation du modèle inverse, les écarts de régulation ou les écarts de courant sont convertis en écarts de tension à l'aide du modèle inverse.

**2.** Procédé selon la revendication 1,
la variable de rétroaction (Idq) dans le système orienté champ comprenant une harmonique avec une fréquence positive ayant une première amplitude et une première phase d'un k-ème ordre d'une fréquence électrique de la machine électrique (190) et/ou une harmonique avec une fréquence négative ayant une deuxième amplitude et une deuxième phase d'un k-ème ordre d'une fréquence électrique de la machine électrique (190).

**3.** Procédé selon la revendication 2,

la transformation (420) de la variable de rétroaction (Idq) s'effectuant en fonction d'un angle de rotor (w) actuel déterminé de la machine électrique (190) et la transformation (420) comprenant une rotation avec un angle de rotation qui correspond à k fois l'angle de rotor (w) actuel,
et la rotation (420) étant effectuée dans la direction positive et/ou la direction négative.

**4.** Procédé selon l'une des revendications précédentes,
la variable de référence continue (IHrmc*) pouvant être prédéfinie du système orienté harmonique comprenant une grandeur de consigne dans le système orienté harmonique pour générer une harmonique sur un courant de phase sinusoïdal en vue d'alimenter au moins un enroulement de la machine électrique (190).

**5.** Procédé selon la revendication 1,

la transformation inverse (450) de la variable de commande continue (UHrmc*) s'effectuant en fonction d'un angle de rotor (w) actuel déterminé de la machine électrique (190)
la transformation inverse (450) comprenant une rotation avec un angle de rotation qui correspond à k fois l'angle de rotor (w) actuel,
et la transformation inverse (450) comprenant respectivement une rotation dans la direction opposée positive et/ou négative de la rotation de la variable de rétroaction (Idq) au moyen de la transformation d'entrée (110).

**6.** Procédé selon la revendication 1,

avec un régulateur d'onde fondamentale (200),
le régulateur d'onde fondamentale comprenant une transformation d'entrée d'onde fondamentale (210), un régulateur d'onde fondamentale (220) et une transformation de sortie d'onde fondamentale (230),
comprenant les étapes suivantes :

détermination (402) d'une variable de rétroaction machine (Iabc), la variable de rétroaction machine comprenant une variable réelle de la machine électrique ;
transformation (404) de la variable de rétroaction machine (Iabc) au moyen de la transformation d'entrée d'onde fondamentale (210) en la variable de rétroaction (Idq) dans le système orienté champ ;
détermination (406) de l'écart de régulation d'onde fondamentale en tant que différence entre une variable de référence continue d'onde fondamentale (Idq*) pouvant être prédéfinie et la variable de rétroaction (Idq) dans le système orienté champ ;
détermination (408) d'une variable de commande continue d'onde fondamentale au moyen du régulateur d'onde fondamentale (220) en fonction de l'écart de régulation d'onde fondamentale ;
superposition (460) de la variable de commande continue d'onde fondamentale avec la variable de commande (UdqHrmc*) ;
transformation inverse (470) de la variable de sortie de la superposition au moyen de la transformation de sortie d'onde fondamentale (230) en une variable de commande machine (Uabc*) et alimentation électrique (480) d'au moins un enroulement de la machine électrique (190) en fonction de la variable de commande machine (Uabc*).

**7.** Procédé selon la revendication 6,
la variable de référence continue d'onde fondamentale (Idq*) pouvant être prédéfinie du système orienté champ comprenant une variable de consigne destinée à générer l'onde fondamentale d'un courant de phase sinusoïdal pour l'alimentation électrique d'au moins un enroulement de la machine électrique (190).

**8.** Produit de programme informatique, comprenant des instructions qui, lors de l'exécution du programme par un dispositif selon la revendication 10, amènent celui-ci à mettre en œuvre le procédé / exécuter les étapes du procédé selon les revendications 1 à 7.

**9.** Support de stockage lisible par ordinateur, comprenant des instructions qui, lorsqu'elles sont exécutées par un dispositif selon la revendication 10, amènent celui-ci à mettre en œuvre le procédé / exécuter les étapes du procédé selon les revendications 1 à 7.

**10.** Dispositif (300) de régulation d'une machine électrique (190),

comprenant une unité de calcul (310) et un régulateur d'harmoniques (100), le régulateur d'harmoniques comprenant une transformation d'entrée (110), un régulateur (120) et une transformation de sortie (130),
le dispositif étant conçu pour exécuter les étapes du procédé selon l'une des revendications 1 à 5.

**11.** Dispositif (300) selon la revendication 10,

avec un régulateur d'onde fondamentale (200), le régulateur d'onde fondamentale comprenant une transformation d'entrée d'onde fondamentale (210), un régulateur d'onde fondamentale (220) et une transformation de sortie d'onde fondamentale (230),
le dispositif étant conçu pour exécuter les étapes du procédé selon l'une des revendications 6 à 7.

**12.** Système d'entraînement électrique (500) comprenant une machine électrique (190) et un dispositif (300) selon l'une des revendications 10 à 11.

**13.** Véhicule (600) comprenant un système d'entraînement électrique (500) selon la revendication 12.

**FIG. 1**

**FIG. 2**

EP 4 066 375 B1

**FIG. 3**

**FIG. 4**

**FIG. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002097015 A1
- US 2006038531 A1
- US 2013193898 A1
- DE 102018202967 A1
- DE 201710203691 A1